# EUROPEAN PATENT SPECIFICATION

(11) **EP 4 481 934 B1**
(45) Date of publication and mention of the grant of the patent: **01.04.2026**
(21) Application number: 23756570.0
(22) Date of filing: 09.02.2023
(51) Int. Cl.: H01M 50/564, B23K 20/10, B23K 37/04, H01M 50/543, H01M 50/557, H01M 50/566, H01M 10/04, B23K 101/38, H01M 50/536, H01M 50/54

(54) **ELECTRODE TAB JIG ASSEMBLY AND ELECTRODE TAB WELDING DEVICE COMPRISING SAME**
ELEKTRODENLASCHEN-EINSPANNVORRICHTUNGSANORDNUNG UND ELEKTRODENLASCHENSCHWEISSVORRICHTUNG DAMIT
ENSEMBLE GABARIT DE LANGUETTE D'ÉLECTRODE ET DISPOSITIF DE SOUDAGE DE LANGUETTE D'ÉLECTRODE LE COMPRENANT

(30) Priority: 15.02.2022 KR 20220019800; 03.02.2023 KR 20230014730
(43) Date of publication of application: 25.12.2024
(73) Proprietor: LG Energy Solution, Ltd., Seoul 07335 (KR)
(72) Inventor: PARK, Min Cheol, Daejeon 34122 (KR); LEE, Jin Yong, Daejeon 34122 (KR)
(74) Representative: Goddar, Heinz J.
(86) International application number: PCT/KR2023/001944
(87) International publication number: WO 2023/158157

(56) References cited:
- JP-A- 2019 207 794
- KR-A- 20150 025 687
- KR-A- 20180 073 378
- KR-A- 20180 073 378
- KR-A- 20220 011 032
- KR-B1- 102 043 114
- KR-B1- 102 234 993
- US-A1- 2020 368 855

## Description

### TECHNICAL FIELD

### CROSS-REFERENCE TO RELATED APPLICATION

The present application claims the benefit of the priority of Korean Patent Application Nos. 10-2022-0019800, filed on February 15, 2022, and 10-2023-0014730, filed on February 03, 2023.

### TECHNICAL FIELD

The present invention relates to a jig assembly for electrode tabs, which gathers the electrode tabs and a welding device for the electrode tabs, which includes the same.

### BACKGROUND ART

In general, secondary batteries refer to chargeable and dischargeable, unlike primary batteries that are not chargeable. The secondary batteries are being widely used for mobile phones, notebook computers, and camcorders, electric vehicles, and the like.

The secondary batteries are classified into a can-type secondary battery, in which an electrode assembly is embedded in a metal can, and a pouch-type secondary battery in which an electrode assembly is embedded in a pouch. The can-type secondary battery includes an electrode assembly, a can accommodating the electrode assembly, and a cap assembly mounted on an opening of the can. In addition, the pouch-type secondary battery includes an electrode assembly, a pouch accommodating the electrode assembly, and an electrode lead connected to an electrode assembly and lead out of the pouch.

Also, the electrode assembly has a structure in which a plurality of electrodes and a plurality of separators are alternately stacked, and the electrode tab is provided on an end of each of the electrodes. That is, the electrode tabs are provided at ends of the plurality of electrodes. In addition, the electrode tabs are coupled to an electrode lead in a bundled state.

The plurality of electrodes may be a positive electrode and a negative electrode. That is, the electrode assembly has a structure in which the positive electrode and the negative electrode are alternately disposed with a separator interposed therebetween.

Here, the electrode tabs and the electrode lead are coupled to each other through a welding device, and the welding device includes a guide jig that gathers the electrode tabs together, and a horn and anvil for welding the electrode tabs to the electrode lead. The guide jig includes first and second pressing members that press the upper and lower portions of the electrode tabs to gather the electrode tabs together.

However, the guide jig has a problem in that the electrode tabs are damaged or deformed by pressing force of the first and second pressing members.

Patent document US 2020/368855 A1 discloses a pliers-like jig for squeezing a plurality of bus-bars in an adjustable manner.

### DISCLOSURE OF THE INVENTION

### TECHNICAL PROBLEM

According to the present invention, pressing force applied to electrode tabs may be adjusted by spacing first and second pressing members apart from each other so as to be maintained at a predetermined distance or more, thereby preventing the electrode tabs from being damaged and deformed. Particularly, an object of the present invention is to provide a jig assembly for an electrode tab, in which an interval between first and second pressing members is easily adjusted to improve work efficiency, and a welding device for the electrode tab, which includes the same.

### TECHNICAL SOLUTION

The present invention may relate to a jig assembly for an electrode tab, which includes: a first pressing member and a second pressing member, which are configured to press electrode tab provided on a plurality of electrode parts so that the electrode tabs are gathered to be bundled; and an adjustment jig configured to space the first pressing member and the second pressing member apart from each other so that an interval between the first pressing member and the second pressing member is maintained at a set interval or more so as to adjust pressing force applied to the electrode tabs.

The adjustment jig may include an adjustment part provided between the first pressing member and the second pressing member to space the first pressing member and the second pressing member apart from each other so that the interval between the first pressing member and the second pressing member is maintained at the set interval or more.

The first pressing member and the second pressing member may be provided to extend to be elongated in a full-width direction of the electrode tabs, and the adjustment part may be provided between an end of the first pressing member and an end of the second pressing member, which extend to the outside of the electrode tabs.

A pressing surface of each of the first pressing member and the second pressing member, which press the electrode tabs, may be provided as a horizontal plane, and the adjustment part may have a square block shape to be in close surface contact with the pressing surface of each of the first pressing member and the second pressing member.

The set interval may be a thickness of the adjustment part, and the thickness of the adjustment part may be less than that of the bundled electrode tabs.

The adjustment jig may further include a fixing part provided on each of both ends of one surface of the adjustment part disposed in a full-length direction of the electrode tabs to support each of both surfaces of the first pressing member.

The fixing part and the adjustment part may be provided to be integrated with each other.

One fixing part of the fixing parts may be integrally provided on an end of one side of the adjustment part, and the other fixing part may be coupled to an end of the other side of the adjustment part so as to be slidably movable toward the first pressing member.

A guide groove extending toward the first pressing member may be defined in an end of one side of the adjustment part, and a guide protrusion slidably coupled to the guide groove may be disposed on the other fixing part.

The adjustment jig may further include a support part provided on one end of the other surface of the adjustment part disposed in a full-length direction of the electrode tabs so as to be supported on a surface of the second pressing member.

The support part and the adjustment part may be provided to be integrated with each other.

A protective film having elasticity may be further provided on a surface of the adjustment part on which the first pressing member and the second pressing member are supported.

Each of the first pressing member and the second pressing member may be made of a metal material, and one surface of the adjustment part may have magnetism to be attached to the first pressing member.

The jig assembly for the electrode tab may further include an inspection member configured to measure an interval between the first pressing member and the second pressing member, which are spaced apart from each other by the adjustment part, wherein, if the measured interval is within a range of an input set interval, it may be determined as being normal, and if the measured interval is out of the range of the set interval, it may be determined as being defective.

A welding device for an electrode tab according to the present invention may include the jig assembly for the electrode tab.

### ADVANTAGEOUS EFFECTS

The jig assembly for the electrode tab according to the present invention may include the adjustment jig so that the interval between the first and second pressing members are spaced apart from each other so as to be maintained at the set distance or more from, and thus, the pressing force applied to the electrode tabs may be adjusted to prevent the electrode tabs from being damaged and deformed. Particularly, since the interval between the first and second pressing members may be easily adjusted to improve the work efficiency.

### BRIEF DESCRIPTION OF THE DRAWINGS

FIG. 1 is an exploded perspective view illustrating a jig assembly for an electrode tab according to a first embodiment of the present invention.
FIG. 2 is an assembled perspective view illustrating the jig assembly for the electrode tab according to the first embodiment of the present invention.
FIG. 3 is a front view of FIG. 2.
FIG. 4 is a side view of FIG. 2.
FIG. 5 is a side view illustrating a welding device for an electrode tab according to a second embodiment of the present invention.
FIG. 6 is a perspective view illustrating a jig assembly for an electrode tab according to a third embodiment of the present invention.
FIG. 7 is a side view illustrating a welding device for an electrode tab according to a fourth embodiment of the present invention.
FIG. 8 is a side view illustrating a welding device for an electrode tab according to a fifth embodiment of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Secondary battery]

A secondary battery includes an electrode assembly and a pouch accommodating the electrode assembly. The electrode assembly has a structure in which a plurality of electrodes and a plurality of separators are alternately disposed. In addition, the pouch includes an accommodation part accommodating the electrode assembly and a sealing part sealing the accommodation part.

The plurality of electrodes may be positive and negative electrodes. That is, the electrode assembly has a structure in which the positive electrode and the negative electrode are alternately disposed with a separator interposed therebetween.

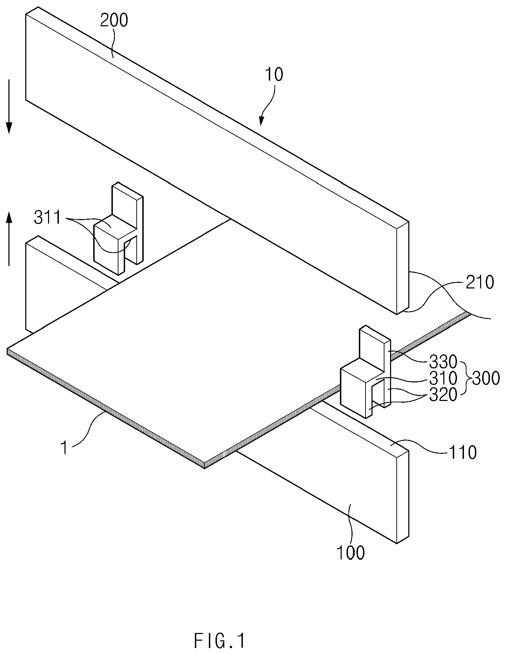

Referring to FIG. 1, an electrode tab is provided on an end of the electrode. That is, a plurality of electrode tabs 1 (hereinafter, referred to as electrode tabs) are provided on ends of the plurality of electrodes. In addition, the electrode leads 2 are coupled to the electrode tabs 1.

Here, in order to couple the electrode tabs to the electrode lead 2, the electrode tabs 1 have to be gathered together, and at this time, the jig assembly 10 for the electrode tabs according to the first embodiment of the present invention is used.

### [Jig assembly for electrode tab according to first embodiment of the present invention]

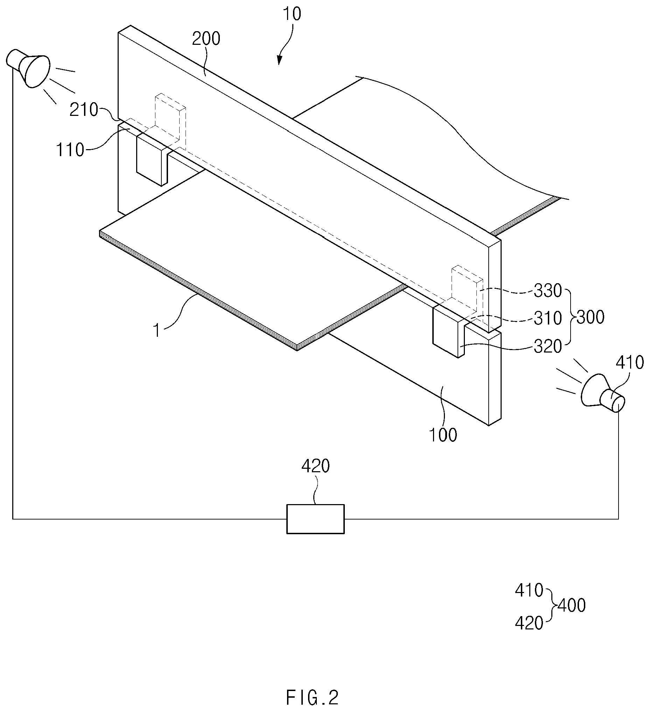

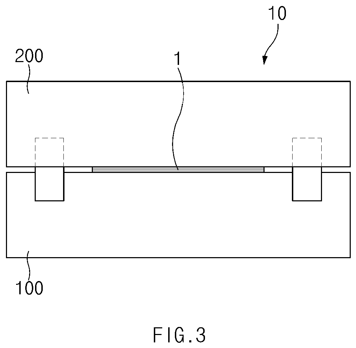

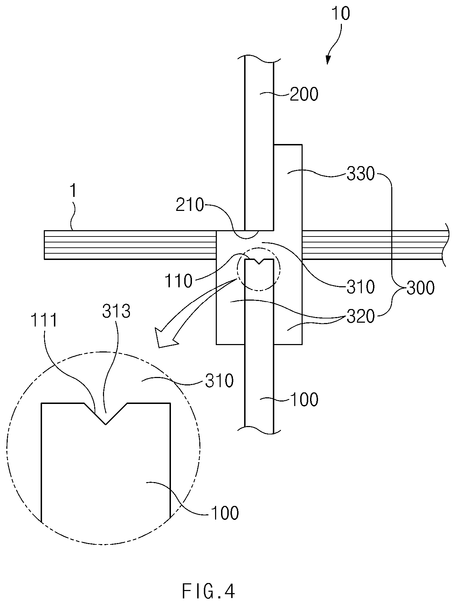

FIG. 1 is an exploded perspective view illustrating a jig assembly for an electrode tab according to a first embodiment of the present invention, FIG. 2 is an assembled perspective view illustrating the jig assembly for the electrode tab according to the first embodiment of the present invention, FIG. 3 is a front view of FIG. 2, and FIG. 4 is a side view of FIG. 2.

As illustrated in FIGS. 1 to 4, a jig assembly 10 for electrode tabs according to a first embodiment of the present invention is configured to gather electrode tabs 1 provided on ends of a plurality of electrodes.

That is, the jig assembly 10 for the electrode tabs according to the first embodiment of the present invention includes a first pressing member 100, a second pressing member 200, and an adjustment jig 300.

### First pressing member and second pressing member

The first pressing member 100 and the second pressing member 200 press the electrode tabs 1 to gather the electrode tabs 1 together. That is, referring to FIG. 1, the first pressing member 100 and the second pressing member 200 has a structure, in which the first pressing member 100 and the second pressing member 200 are symmetrically provided on the uppermost and lowermost ends of the electrode tabs 1, respectively, and press the electrode tabs 1 so that the electrode tabs 1 are bundled to be gathered.

For example, the first pressing member 100 is disposed on the lowermost end of the electrode tabs 1, and the second pressing member 200 is disposed to be movable toward the first pressing member 100 by a hydraulic device (not shown) in a state of being disposed at the uppermost end of the electrode tabs 1. Thus, the electrode tabs 1 are gathered by the first and second pressing members 100 and 200.

Each of a pressing surface 110 of the first pressing member 100 and a pressing surface 210 of the second pressing member 200, which press the electrode tabs 1, may be provided as a horizontal plane to increase in adhesion.

### Adjustment jig

The adjustment jig 300 spaces the first pressing member 100 and the second pressing member 200 apart from each other so that the first pressing member 100 and the second pressing member 200 are maintained at a set interval or more, thereby adjusting pressing force applied to the electrode tabs 1. In other words, the adjustment jig may space the first pressing member 100 and the second pressing member 200 so that the first pressing member 100 and the second pressing member 200 is not spaced a set interval or less from each other.

For example, the adjustment jig 300 includes an adjustment part 310. The adjustment part 310 is provided between the first pressing member 100 and the second pressing member 200 to support the first pressing member 100 and the second pressing member 200.

That is, the adjustment part 310 may be disposed between the pressing surface 110 of the first pressing member 100 and the pressing surface 210 of the second pressing member 200, and thus, the first pressing member 100 and the second pressing member 200 may be maintained to be spaced a set interval or more from each other. In other words, the adjustment part 310 may space the first pressing member 100 and the second pressing member 200 apart from each other so that the first pressing member 100 and the second pressing member 200 are maintained at a set distance or more, and thus, the electrode tabs pressed by the first pressing member 100 and the second pressing member 200 may be adjusted so as not to be pressed to be spaced the set interval or less from each other, thereby preventing the electrode tabs 1 from being damaged and deformed.

The first pressing member 100 and the second pressing member 200 may be provided to be elongated in a full-width direction of the electrode tabs 1 (left and right direction when viewed in FIG. 3). In addition, the adjustment part 310 may be provided between an end of the first pressing member 100 and an end of the second pressing member 200, which extend to the outside of the electrode tabs 1. Thus, it is possible to prevent an interference between the adjustment part 310 and the electrode tabs 1, and as a result, it is possible to prevent an electrode tab part from being damaged by the adjustment part 310. Particularly, the adjustment part 310 may be provided between both the ends of the first pressing member 100 and both the ends of the second pressing member 200, and thus, the first pressing member 100 and the second pressing member 200 may be stably supported.

The adjustment part 310 may have a square block shape so that the pressing surfaces 210 of the first pressing member 100 and the second pressing member 200 are in close surface contact with each other. Particularly, the adjustment part 310 may be made of the same material as that of each of the first pressing member 100 and the second pressing member 200. Thus, it is possible to prevent the adjustment part 310 or the first pressing member 100 and the second pressing member 200 from being easily worn out.

An adhesive layer may be further provided between the adjustment part and the first pressing member. Thus, adhesion between the adjustment part and the first pressing member may increase. Referring to the enlarged view of FIG. 4, a 'V'-shaped coupling groove 111 may be defined in the pressing surface 110 of the first pressing member 100 in a longitudinal direction, and a 'V'-shaped coupling protrusion 313 may be defined in the adjustment part 310 so as to be movable along the coupling groove 111. This may prevent fixing force and shaking of the adjustment part.

The set interval may be a thickness of the adjustment part 310. In addition, the thickness of the adjustment part 310 may be equal to or less than a thickness of the bundled electrode tabs 1. Preferably, the thickness of the adjustment part is less that the thickness of the bundled electrode tabs. Thus, the electrode tabs 1 may be effectively pressed by the first pressing member 100 and the second pressing member 200, and thus, the electrode tabs 1 may be gathered to be bundled.

The adjustment jig 300 may further include a fixing part 320. The fixing part 320 may be provided on each of both ends (both ends of a bottom surface of the adjustment part 310 when viewed in FIG. 1) of one surface of the adjustment part 310 disposed in a full-length direction of the electrode tabs 1 (i.e., the lengthwise direction of the electrode tabs) and may be supported on both surfaces of the first pressing member 100. Thus, the adjustment part 310 may be disposed so as not to move on the pressing surface 110 of the first pressing member 100.

The fixing part 320 and the adjustment part 310 may be integrally provided. That is, the fixing part 320 and the adjustment part 310, which are integrated with each other, may have a 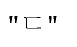 shape. Thus, ease of the manufacture may be improved.

The adjustment jig 300 may further include a support part 330. The support part 330 is provided on one end of the other surface of the adjustment part 310 (rear end of a top surface of the adjustment part 310 when viewed in FIG. 1) disposed in the full-length direction of the electrode tabs 1 and is supported on the second pressing member 200. That is, the support part 330 guides the second pressing member 200 to be supported on the top surface of the adjustment part 310.

The support part 330 and the adjustment part 310 may be integrally provided. Thus, ease of the manufacture may be improved.

Therefore, the jig assembly 10 for the electrode tabs according to the first embodiment of the present invention may adjust the pressing force applied to the electrode tabs 1 by providing the adjustment jig 300, and as a result, the electrode tabs 1 may be prevented from being damaged and deformed. Particularly, since the interval between the first and second pressing members 200 may be easily adjusted to improve the work efficiency.

The jig assembly 10 for an electrode tab according to the first embodiment of the present invention may further include an inspection member 400.

### Inspection member

Referring to FIG. 2, the inspection member 400 is configured to measure the interval between the first pressing member 100 and the second pressing member 200. That is, the inspection member 400 measures the interval between the first pressure member 100 and the second pressure member 200, which are spaced apart from each other by the adjustment part 310, and if the measured interval is within a range of an input set interval, it is determined as being normal, and if the measured interval is out of the range of the set interval, it is determined as being defective.

The inspection member 400 includes an infrared camera 410 that measures the interval between the first pressing member 100 and the second pressing member 200 and an inspection part 420 that measures the interval between the first pressing member 100 and the second pressing member 200 through an image photographed by the infrared camera 410 to inspect whether the measured interval is within the range of the input set interval.

Therefore, the jig assembly 10 for the electrode tab according to the first embodiment of the present invention may further include the inspection member 400 to easily check whether the interval between the first pressing member 100 and the second pressing member 200 is reduced below the set interval or more.

Hereinafter, in describing another embodiment of the present invention, the same reference numerals are used for the same components as those of the above-described embodiment, and duplicated descriptions will be omitted.

### [Welding device for electrode tab according to second embodiment of the present invention]

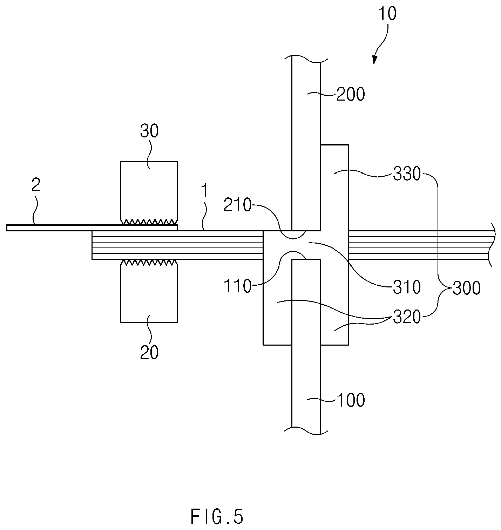

FIG. 5 is a side view illustrating a welding device for an electrode tab according to a second embodiment of the present invention.

A welding device for an electrode tab according to a second embodiment of the present invention has a structure including a jig assembly for an electrode tab that is described above.

For example, as illustrated in FIG. 5, the welding device for the electrode tab according to the second embodiment of the present invention includes a jig assembly for the electrode tab that presses electrode tabs 1 provided on ends of a plurality of electrodes to gather the electrode tabs 1, an anvil 20 supporting a bottom surface of a welding part in which the electrode tabs and an electrode lead 2 overlap each other, and a horn 30 disposed on a top surface of the welding part to weld the electrode tabs 1 to the electrode lead 2 using ultrasonic waves in a state of pressing the electrode tab 1 together with the anvil 20.

The jig assembly for the electrode tab has the same configuration as the jig assembly for the electrode tab described in the first embodiment, and thus, duplicated descriptions are omitted.

Therefore, the welding device for electrode tab according to the second embodiment of the present invention may stably weld the electrode tabs to the electrode lead 2 without damaging or deforming the electrode tabs 1.

### [Jig assembly for electrode tab according to third embodiment of the present invention]

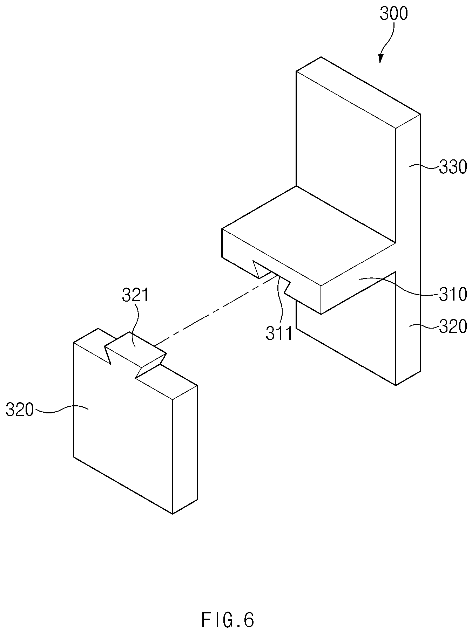

FIG. 6 is a perspective view illustrating a jig assembly for an electrode tab according to a third embodiment of the present invention.

A jig assembly for an electrode tab according to a third embodiment of the present invention includes an adjustment jig 300, and the adjustment jig 300 includes a fixing part 320 provided on each of both ends of a bottom surface of the adjustment part 310.

Here, one fixing part 320 of the fixing parts 320 is integrally provided on one end of an adjustment part 310, and the other fixing part 320 is coupled to the other end of the adjustment part 310. Here, the other fixing part 320 is coupled to be slidably movable toward the first pressing member 100.

For example, a guide groove 311 extending toward the first pressing member 100 is defined in one end of the adjustment part 310, and a guide protrusion 321 slidably coupled to the guide groove 311 is disposed on the other fixing part 320. Thus, an interval between the fixing part 320 provided on each of both the ends of the adjustment part 310 and the fixing part 320 may be adjusted. The fixing part that is fixed in position may be fixed to the adjustment part through a fixing means such as a bolt.

Therefore, the jig assembly for the electrode tab according to the third embodiment of the present invention may be used to be compatible with the first pressing member 100 having various thicknesses. Particularly, the adjustment jig may be compressed to the first pressing member 100 by adjusting the interval between the fixing part 320 and the fixing part 320 to prevent the adjustment jig 300 from being separated from the first pressing member 100.

### [Jig assembly for electrode tab according to fourth embodiment of the present invention]

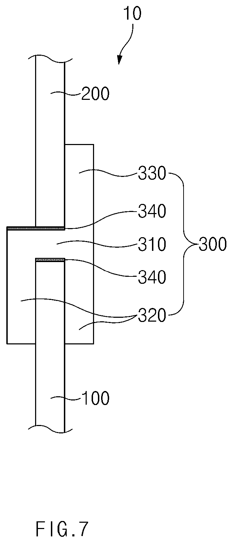

FIG. 7 is a side view illustrating a welding device for an electrode tab according to a fourth embodiment of the present invention.

As illustrated in FIG. 7, a jig assembly for an electrode tab according to a fourth embodiment of the present invention includes an adjustment part 310 supporting a first pressing member 100 and a second pressing member 200.

Here, a protective film having elasticity is provided on a surface of the adjustment part 310 on which the first pressing member 100 and the second pressing member 200 are supported. The protective film may be made of a synthetic resin material.

Therefore, a welding device for the electrode tab according to the fourth embodiment of the present invention may prevent impact force and noise between the first pressing member 100 and the adjustment part 310 or between the second pressing member 200 and the adjustment part 310 from occurring, and particularly, may significantly prevent abrasion from occurring.

The protective film may have a thickness of 1 µm to 10 µm and may be replaced every set time.

### [Jig assembly for electrode tab according to fifth embodiment of the present invention]

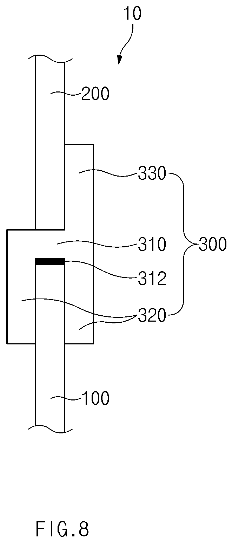

FIG. 8 is a side view illustrating a welding device for an electrode tab according to a fifth embodiment of the present invention.

As illustrated in FIG. 8, in a jig assembly for an electrode tab according to a fifth embodiment of the present invention, each of a first pressing member 100 and a second pressing member 200 is made of a metal material, and one surface of an adjustment part 310 (bottom surface of the adjustment part 310 when viewed in FIG. 8) has magnetic force to be attached to the first pressing member 100. That is, one surface of the adjustment part 310 may be provided as a magnet surface 312.

Therefore, in the welding device for the electrode tab according to the fifth embodiment of the present invention, the adjustment part 310 may be stably attached and fixed to the first pressing member 100 without a separate member.

Accordingly, the scope of the present invention is defined by the appended claims.

### [Description of the Symbols]

1: Electrode tab
2: Electrode lead
10: Jig assembly for electrode tab
20: Anvil
30: Horn
100: First pressing member
110: Pressing surface
111: Coupling groove
200: Second pressing member
210: Pressing surface
300: Adjustment jig
310: Adjustment part
311: Guide groove
312: Magnet surface
313: Coupling protrusion
320: Fixing part
321: Guide protrusion
330: Support part
400: Inspection member

## Claims

1. A jig assembly for an electrode tab, comprising:
a first pressing member and a second pressing member, which are configured to press electrode tab provided on a plurality of electrode parts so that the electrode tabs are gathered to be bundled; and **characterised by**
an adjustment jig configured to space the first pressing member and the second pressing member apart from each other so that an interval between the first pressing member and the second pressing member is maintained at a set interval or more so as to adjust pressing force applied to the electrode tabs.

2. The jig assembly for the electrode tab of claim 1, wherein the adjustment jig comprises an adjustment part provided between the first pressing member and the second pressing member to space the first pressing member and the second pressing member apart from each other so that the interval between the first pressing member and the second pressing member is maintained at the set interval or more.

3. The jig assembly for the electrode tab of claim 2, wherein the first pressing member and the second pressing member are provided to extend to be elongated in a full-width direction of the electrode tabs, and
the adjustment part is provided between an end of the first pressing member and an end of the second pressing member, which extend to the outside of the electrode tabs.

4. The jig assembly for the electrode tab of claim 2, wherein a pressing surface of each of the first pressing member and the second pressing member, which press the electrode tabs, is provided as a horizontal plane, and
the adjustment part has a square block shape to be in close surface contact with the pressing surface of each of the first pressing member and the second pressing member.

5. The jig assembly for the electrode tab of claim 2, wherein the set interval is a thickness of the adjustment part, and
the thickness of the adjustment part is less than that of the bundled electrode tabs.

6. The jig assembly for the electrode tab of claim 2, wherein the adjustment jig further comprises a fixing part provided on each of both ends of one surface of the adjustment part disposed in a full-length direction of the electrode tabs to support each of both surfaces of the first pressing member.

7. The jig assembly for the electrode tab of claim 6, wherein the fixing part and the adjustment part are provided to be integrated with each other.

8. The jig assembly for the electrode tab of claim 6, wherein one fixing part of the fixing parts is integrally provided on an end of one side of the adjustment part, and the other fixing part is coupled to an end of the other side of the adjustment part so as to be slidably movable toward the first pressing member.

9. The jig assembly for the electrode tab of claim 8, wherein a guide groove extending toward the first pressing member is defined in an end of one side of the adjustment part, and
a guide protrusion slidably coupled to the guide groove is disposed on the other fixing part.

10. The jig assembly for the electrode tab of claim 2, wherein the adjustment jig further comprises a support part provided on one end of the other surface of the adjustment part disposed in a full-length direction of the electrode tabs so as to be supported on a surface of the second pressing member.

11. The jig assembly for the electrode tab of claim 10, wherein the support part and the adjustment part are provided to be integrated with each other.

12. The jig assembly for the electrode tab of claim 2, further comprising a protective film having elasticity is further provided on a surface of the adjustment part on which the first pressing member and the second pressing member are supported.

13. The jig assembly for the electrode tab of claim 2, wherein each of the first pressing member and the second pressing member is made of a metal material, and
one surface of the adjustment part has magnetism to be attached to the first pressing member.

14. The jig assembly for the electrode tab of claim 2, wherein the jig assembly for the electrode tab further comprises an inspection member configured to measure an interval between the first pressing member and the second pressing member, which are spaced apart from each other by the adjustment part,
wherein, if the measured interval is within a range of an input set interval, it is determined as being normal, and if the measured interval is out of the range of the set interval, it is determined as being defective.

15. A welding device for an electrode tab, comprising the jig assembly for the electrode tab of claim 1.

## Patentansprüche

1. Spannvorrichtungsanordnung für eine Elektrodenlasche, aufweisend:
ein erstes Presselement und ein zweites Presselement, die konfiguriert sind, um Elektrodenlaschen zu pressen, die auf mehreren Elektrodenteilen bereitgestellt sind, so dass die Elektrodenlaschen gebündelt gesammelt werden;
**gekennzeichnet durch**
eine Einstellspannvorrichtung, die konfiguriert ist, um das erste Presselement und das zweite Presselement voneinander zu beabstanden, so dass ein Abstand zwischen dem ersten Presselement und dem zweiten Presselement auf einem festgelegten Abstand oder mehr gehalten wird, um eine Presskraft einzustellen, die auf die Elektrodenlaschen ausgeübt wird.

2. Spannvorrichtungsanordnung für die Elektrodenlasche nach Anspruch 1, wobei die Einstellspannvorrichtung ein Einstellteil aufweist, das zwischen dem ersten Presselement und dem zweiten Presselement bereitgestellt ist, um das erste Presselement und das zweite Presselement voneinander zu beabstanden, so dass der Abstand zwischen dem ersten Presselement und dem zweiten Presselement auf dem festgelegten Abstand oder mehr gehalten wird.

3. Spannvorrichtungsanordnung für die Elektrodenlasche nach Anspruch 2, wobei das erste Presselement und das zweite Presselement bereitgestellt sind, um sich zu erstrecken, um in einer Richtung der vollen Breite der Elektrodenlaschen langgestreckt zu sein, und
das Einstellteil zwischen einem Ende des ersten Presselements und einem Ende des zweiten Presselements bereitgestellt ist, die sich zur Außenseite der Elektrodenlaschen erstrecken.

4. Spannvorrichtungsanordnung für die Elektrodenlasche nach Anspruch 2, wobei eine Pressfläche von jedem des ersten Presselements und des zweiten Presselements, die die Elektrodenlaschen pressen, als eine horizontale Ebene bereitgestellt ist, und
das Einstellteil eine quadratische Blockform aufweist, um in engem Oberflächenkontakt mit der Pressfläche von jedem des ersten Presselements und des zweiten Presselements zu sein.

5. Spannvorrichtungsanordnung für die Elektrodenlasche nach Anspruch 2, wobei der festgelegte Abstand eine Dicke des Einstellteils ist, und
die Dicke des Einstellteils geringer als die der gebündelten Elektrodenlaschen ist.

6. Spannvorrichtungsanordnung für die Elektrodenlasche nach Anspruch 2, wobei die Einstellspannvorrichtung ferner ein Befestigungsteil aufweist, das an jedem der beiden Enden einer Fläche des Einstellteils bereitgestellt ist, die in einer Richtung der vollen Länge der Elektrodenlaschen angeordnet ist, um jede der beiden Flächen des ersten Presselements zu stützen.

7. Spannvorrichtungsanordnung für die Elektrodenlasche nach Anspruch 6, wobei das Befestigungsteil und das Einstellteil bereitgestellt sind, um miteinander integriert zu sein.

8. Spannvorrichtungsanordnung für die Elektrodenlasche nach Anspruch 6, wobei ein Befestigungsteil der Befestigungsteile integral an einem Ende einer Seite des Einstellteils bereitgestellt ist, und das andere Befestigungsteil mit einem Ende der anderen Seite des Einstellteils gekoppelt ist, um gleitend in Richtung des ersten Presselements bewegbar zu sein.

9. Spannvorrichtungsanordnung für die Elektrodenlasche nach Anspruch 8, wobei eine Führungsnut, die sich in Richtung des ersten Presselements erstreckt, in einem Ende einer Seite des Einstellteils definiert ist, und
ein Führungsvorsprung, der gleitend mit der Führungsnut gekoppelt ist, an dem anderen Befestigungsteil angeordnet ist.

10. Spannvorrichtungsanordnung für die Elektrodenlasche nach Anspruch 2, wobei die Einstellspannvorrichtung ferner ein Stützteil aufweist, das an einem Ende der anderen Fläche des Einstellteils bereitgestellt ist, die in einer Richtung der vollen Länge der Elektrodenlaschen angeordnet ist, um auf einer Fläche des zweiten Presselements gestützt zu sein.

11. Spannvorrichtungsanordnung für die Elektrodenlasche nach Anspruch 10, wobei das Stützteil und das Einstellteil bereitgestellt sind, um miteinander integriert zu sein.

12. Spannvorrichtungsanordnung für die Elektrodenlasche nach Anspruch 2, ferner aufweisend einen Schutzfilm mit Elastizität, der ferner auf einer Fläche des Einstellteils bereitgestellt ist, auf der das erste Presselement und das zweite Presselement gestützt sind.

13. Spannvorrichtungsanordnung für die Elektrodenlasche nach Anspruch 2, wobei jedes des ersten Presselements und des zweiten Presselements aus einem Metallmaterial hergestellt ist, und
eine Fläche des Einstellteils Magnetismus aufweist, um an dem ersten Presselement befestigt zu sein.

14. Spannvorrichtungsanordnung für die Elektrodenlasche nach Anspruch 2, wobei die Spannvorrichtungsanordnung für die Elektrodenlasche ferner ein Prüfelement aufweist, das konfiguriert ist, um einen Abstand zwischen dem ersten Presselement und dem zweiten Presselement zu messen, die durch das Einstellteil voneinander beabstandet sind,
wobei, wenn der gemessene Abstand innerhalb eines Bereichs eines eingegebenen festgelegten Abstands ist, bestimmt wird, dass er normal ist, und wenn der gemessene Abstand außerhalb des Bereichs des festgelegten Abstands ist, bestimmt wird, dass er defekt ist.

15. Schweißvorrichtung für eine Elektrodenlasche, aufweisend die Spannvorrichtungsanordnung für die Elektrodenlasche nach Anspruch 1.

## Revendications

1. Ensemble de gabarit pour languette d'électrode, comprenant :
un premier élément de pression et un deuxième élément de pression, configurés pour faire pression sur une languette d'électrode agencée sur une pluralité de composants d'électrode de sorte que les languettes d'électrode soient rassemblées pour être groupées ; et **caractérisé par**
un gabarit de réglage configuré pour espacer l'un de l'autre le premier élément de pression et le deuxième élément de pression de sorte qu'un intervalle entre le premier élément de pression et le deuxième élément de pression soit maintenu à un intervalle défini, ou supérieur, afin d'ajuster la force de pression appliquée sur les languettes d'électrode.

2. Ensemble de gabarit pour la languette d'électrode selon la revendication 1, le gabarit de réglage comprenant une pièce de réglage agencée entre le premier élément de pression et le deuxième élément de pression pour espacer l'un de l'autre le premier élément de pression et le deuxième élément de pression, de sorte que l'intervalle entre le premier élément de pression et le deuxième élément de pression soit maintenu à l'intervalle défini ou supérieur.

3. Ensemble de gabarit pour la languette d'électrode selon la revendication 2, le premier élément de pression et le deuxième élément de pression étant agencés pour se déployer afin d'être allongés dans une direction pleine largeur des languettes d'électrode, et
la pièce de réglage étant agencée entre un bout du premier élément de pression et un bout du deuxième élément de pression, déployés vers l'extérieur des languettes d'électrode.

4. Ensemble de gabarit pour la languette d'électrode selon la revendication 2, une surface de pression de chacun du premier élément de pression et du deuxième élément de pression, faisant pression sur les languettes d'électrode, étant agencée comme un plan horizontal, et
la pièce de réglage ayant une forme de bloc carré afin d'être en contact étroit avec la surface de pression de chacun du premier élément de pression et du deuxième élément de pression.

5. Ensemble de gabarit pour la languette d'électrode selon la revendication 2, l'intervalle défini étant une épaisseur de la pièce de réglage, et
l'épaisseur de la pièce étant inférieure à celle des languettes d'électrode groupées.

6. Ensemble de gabarit pour la languette d'électrode selon la revendication 2, le gabarit de réglage comprenant en outre une pièce de fixation agencée sur chacun des deux bouts d'une surface de la pièce de réglage disposée dans une longueur intégrale des languettes d'électrode pour supporter chacune des deux surfaces du premier élément de pression.

7. Ensemble de gabarit pour la languette d'électrode selon la revendication 6, la pièce de fixation et la pièce de réglage étant agencées de façon à être intégrées entre elles.

8. Ensemble de gabarit pour la languette d'électrode selon la revendication 6, une pièce de fixation des pièces de fixation étant agencée de façon intégrale sur un bout d'un côté de la pièce de réglage, et l'autre pièce de fixation étant couplée sur un bout de l'autre côté de la pièce de réglage, afin de pouvoir être déplacée en coulissant vers le premier élément de pression.

9. Ensemble de gabarit pour la languette d'électrode selon la revendication 8, une cannelure de guidage s'étendant vers le premier élément de pression étant définie dans un bout d'un côté de la pièce de réglage, et
une saillie de guidage, couplée en coulissement à la cannelure de guidage, étant disposée sur l'autre pièce de fixation.

10. Ensemble de gabarit pour la languette d'électrode selon la revendication 2, le gabarit de réglage comprenant en outre un élément de support agencé sur un bout de l'autre surface de la pièce de réglage disposée dans une direction pleine largeur des languettes d'électrode, de façon à être supporté sur une surface du deuxième élément de support.

11. Ensemble de gabarit pour la languette d'électrode selon la revendication 10, l'élément de support et la pièce de réglage étant agencés de façon à être intégrés l'un à l'autre.

12. Ensemble de gabarit pour la languette d'électrode selon la revendication 2, comprenant en outre une pellicule de protection présentant une élasticité, agencée sur une surface de la pièce de réglage sur laquelle le premier élément de pression et le deuxième élément de pression sont supportés.

13. Ensemble de gabarit pour la languette d'électrode selon la revendication 2, chacun du premier élément de pression et du deuxième élément de pression étant réalisé avec un matériau métallique, et
une surface de la pièce de réglage étant aimantée afin d'être fixée sur le premier élément de pression.

14. Ensemble de gabarit pour la languette d'électrode selon la revendication 2, l'ensemble de gabarit pour la languette d'électrode comprenant en outre un élément d'inspection configuré pour mesurer un intervalle entre le premier élément de pression et le deuxième élément de pression, espacés l'un de l'autre par la pièce de réglage,
dans lequel, si l'intervalle mesuré est compris dans une plage d'un intervalle établi entré, il est considéré comme étant normal, et si l'intervalle mesuré se trouve hors de la plage de l'intervalle établi, il est considéré comme étant défectueux.

15. Dispositif de soudage pour une languette d'électrode, comprenant le gabarit pour la languette d'électrode selon la revendication 1.
